# EUROPEAN PATENT APPLICATION

(11) **EP 2 701 162 A1**
(43) Date of publication of application: **26.02.2014**
(21) Application number: 12773559.5
(22) Date of filing: 11.04.2012
(51) Int. Cl.: H01B 17/56, B32B 1/08, B32B 7/02, H02K 3/46

(54) **THREE-DIMENSIONAL OBJECT FOR ELECTRICAL INSULATION, AND ELECTRICALLY INSULATING SHEET MATERIAL**

(30) Priority: 18.04.2011 JP 2011092246
(71) Applicant: Nitto Shinko Corporation, Sakai-shi, Fukui 910-0381 (JP); Nitto Denko Corporation, Ibaraki-shi, Osaka 567-8680 (JP)
(72) Inventor: KIHARA, Yasuyuki, Sakai-shi Fukui 910-0381 (JP); TAMBO, Noburo, Sakai-shi Fukui 910-0381 (JP); MAKIDA, Hiroyuki, Sakai-shi Fukui 910-0381 (JP); TAMAI, Akira, Sakai-shi Fukui 910-0381 (JP); UKEI, Hiroichi, Ibaraki-shi Osaka 567-8680 (JP); KASAGI, Tomoyuki, Ibaraki-shi Osaka 567-8680 (JP); KIRA, Yoshiko, Ibaraki-shi Osaka 567-8680 (JP)
(74) Representative: Grünecker, Kinkeldey, Stockmair & Schwanhäusser
(86) International application number: PCT/JP2012/059838
(87) International publication number: WO 2012/144378

(57) **Abstract**

The present invention aims to provide a three-dimensionally shaped electrically insulating product having excellent formability in the process of three-dimensional formation and electrical insulation properties that are suppressed from deteriorating. Provided is a three-dimensionally shaped electrically insulating product formed by subjecting a sheet material having electrical insulation properties at least to a bending process, in which the sheet material includes a resin layer in the form of a sheet containing a thermoplastic resin having nitrogen or sulfur in a molecule and a protective layer in the form of a sheet disposed on each of both sides of the resin layer.

## Description

### FIELD

The present invention relates to a three-dimensionally shaped electrically insulating product obtained by three-dimensionally forming a sheet material having electrical insulation properties. It relates also to an electrically insulating sheet material that is three-dimensionally formed so as to be a three-dimensionally shaped product.

### BACKGROUND

Various types of such a three-dimensionally shaped electrically insulating product are conventionally known. Specific examples thereof include a bobbin for motor that is used with a coil wound therearound.

Specifically, as the three-dimensionally shaped electrically insulating product, there are known those obtained by: three-dimensionally forming, by a bending process, a sheet material in which a protective layer that protects a resin layer in the form of a sheet containing a resin having electrical insulation properties is disposed on each of both sides of the resin layer, and the resin layer and the protective layers are stacked together via an adhesive agent capable of being cured by three-dimensional crosslinking, or the like; and bonding the end portions of a plurality of sheet materials that have been formed into three-dimensional shapes to one another, thereby forming the sheet materials into a bobbin shape, for example (Patent Literature 1).

However, in such a three-dimensionally shaped electrically insulating product formed by bonding a plurality of sheet materials as in Patent Literature 1, the electrical insulation properties might deteriorate with time when the bonded portions in the bobbin for motor partially separate off from each other, for example, due to the clamping load of the coil wound therearound, motor vibration, or heat generated from the coil.

### CITATION LIST

### Patent Literature

Patent Literature 1: JP 2008-263704 A

### SUMMARY

### Technical Problem

As a countermeasure to this for preventing the separation in the bonded portions, there can be mentioned a three-dimensionally shaped electrically insulating product that is formed into a three-dimensional shape by subjecting a sheet material in which a resin layer and protective layers are stacked together via an adhesive agent that is cured by three-dimensional crosslinking, or the like, to a bending process such as drawing, instead of bonding.

Such three-dimensionally shaped electrically insulating product, while suppressing deterioration in electrical insulation properties with time by not having portions where a plurality of sheet materials are bonded together, suffers from a problem of layer separation occurring between the resin layer and each protective layer, for example, due to a force applied in the bending process, because the adhesive agent is difficult to deform in accordance with the bending process such as drawing. There is also a problem, for example, that the sheet material cannot maintain the given shape after the bending process because the cured adhesive agent contained therein elastically recovers after the bending process, that is, transfer accuracy of the molded shape during the bending process is not sufficient. Thus, such three-dimensionally shaped electrically insulating product does not necessarily have excellent formability in the process of three-dimensional formation, though deterioration in electrical insulation properties with time is suppressed, which is a problem.

The present invention has been devised in view of the above-mentioned problems, etc., and an object thereof is to provide a three-dimensionally shaped electrically insulating product having excellent formability in the process of three-dimensional formation and electrical insulation properties that are suppressed from deteriorating. It is also an object of the present invention to provide an electrically insulating sheet material from which a three-dimensionally shaped electrically insulating product having excellent formability in the process of three-dimensional formation and electrical insulation properties that are suppressed from deteriorating can be formed.

### Solution to Problem

The three-dimensionally shaped electrically insulating product of the present invention is formed by subjecting a sheet material having electrical insulation properties at least to a bending process. In the three-dimensionally shaped electrically insulating product, the sheet material includes a resin layer in the form of a sheet containing a thermoplastic resin having nitrogen or sulfur in a molecule and a protective layer in the form of a sheet disposed on each of both sides of the resin layer.

In the three-dimensionally shaped electrically insulating product according to the present invention, the resin layer preferably contains, as the thermoplastic resin, at least one selected from the group consisting of a polyamide resin, a polysulfone resin, and a polyphenylene sulfide resin. When the resin layer contains at least one selected from the group consisting of a polyamide resin, a polysulfone resin, and a polyphenylene sulfide resin, there is an advantage that the layer separation between the resin layer and each protective layer is more suppressed when the sheet material is subjected to the bending process.

In the three-dimensionally shaped electrically insulating product according to the present invention, the polyamide resin is preferably an aromatic polyamide resin having an aromatic hydrocarbon in a molecule. When the polyamide resin is an aromatic polyamide resin having an aromatic hydrocarbon in a molecule, there is an advantage that the layer separation between the resin layer and each protective layer is more suppressed when the sheet material is subjected to the bending process.

In the three-dimensionally shaped electrically insulating product according to the present invention, the polysulfone resin is preferably a polyether sulfone resin in which the polysulfone resin further has a plurality of ether bonds in a molecule. Further, the polysulfone resin is preferably a polyphenylsulfone resin in which the polysulfone resin further has a plurality of aromatic hydrocarbons in a molecule.

In the three-dimensionally shaped electrically insulating product according to the present invention, the resin layer preferably further contains a thermoplastic elastomer resin. Further, the thermoplastic elastomer resin is preferably a maleic acid anhydride-modified polyolefin thermoplastic elastomer.

In the three-dimensionally shaped electrically insulating product according to the present invention, a value obtained by multiplying tensile elastic modulus (MPa) and thickness (mm) of the sheet material is preferably 100 MPa·mm to 750 MPa·mm.

In the three-dimensionally shaped electrically insulating product according to the present invention, the protective layer preferably contains fully aromatic polyamide or polyethylene terephthalate. Such a configuration brings about an advantage that the layer separation between the resin layer and each protective layer when the sheet material is subjected to the bending process is more suppressed.

In the three-dimensionally shaped electrically insulating product according to the present invention, the protective layer is preferably paper fabricated by a wet papermaking process. Further, the protective layer is preferably fully aromatic polyamide paper containing fully aromatic polyamide fibers or polyethylene terephthalate paper containing polyethylene terephthalate fibers.

Further, the protective layer is preferably a nonwoven fabric.

In the three-dimensionally shaped electrically insulating product according to the present invention, it is preferable that at least a surface on the resin layer side of the protective layer be subjected to corona treatment. Such a configuration brings about an advantage that the layer separation between the resin layer and each protective layer when the sheet material is subjected to the bending process is more suppressed.

The three-dimensionally shaped electrically insulating product according to the present invention is preferably used for electrical insulation in a motor coil.

The electrically insulating sheet material according to the present invention is to be formed into a three-dimensionally shaped product at least by bending. The electrically insulating sheet material includes a resin layer in the form of a sheet containing a thermoplastic resin having nitrogen or sulfur in a molecule and a protective layer in the form of a sheet disposed on each of both sides of the resin layer.

### Advantageous Effects of Invention

The three-dimensionally shaped electrically insulating product of the present invention exerts an effect of having excellent formability in the process of three-dimensional formation and electrical insulation properties that are suppressed from deteriorating.

### BRIEF DESCRIPTION OF DRAWINGS

FIG. 1 is a sectional view schematically showing a cross section of a flat sheet material when cut in the thickness direction.
FIG. 2 is a view schematically showing an appearance, viewed at an angle from above, of a three-dimensionally shaped electrically insulating product formed by bending the sheet material.
FIG. 3 is a view schematically showing an appearance, viewed at an angle from above, of a three-dimensionally shaped electrically insulating product formed by bonding sheet materials.
FIG. 4 is a view schematically showing a cross section of a three-dimensionally shaped electrically insulating product for measuring its breakdown voltage.
FIG. 5 is a view schematically showing an appearance, viewed at an angle from above, of a three-dimensionally shaped electrically insulating product formed by bending the sheet material.
FIG. 6 is a view showing a three-dimensionally shaped electrically insulating product and the components of the three-dimensionally shaped electrically insulating product.

### DESCRIPTION OF EMBODIMENTS

Hereinafter, embodiments of the three-dimensionally shaped electrically insulating product and the electrically insulating sheet material according to the present invention are described.

The three-dimensionally shaped electrically insulating product of this embodiment is formed at least by bending a sheet material having electrical insulation properties. In the three-dimensionally shaped electrically insulating product, the sheet material includes a resin layer in the form of a sheet containing a thermoplastic resin having nitrogen or sulfur in a molecule, and a protective layer in the form of a sheet disposed on each of both sides of the resin layer.

Meanwhile, the electrically insulating sheet material of this embodiment is to be formed into a three-dimensionally shaped product by being subjected at least to a bending process. The electrically insulating sheet material includes a resin layer in the form of a sheet containing a thermoplastic resin having nitrogen or sulfur in a molecule, and a protective layer in the form of a sheet disposed on each of both sides of the resin layer.

First, the electrically insulating sheet material (hereinafter, simply referred to also as a sheet material) in the case of including one layer of the resin layer, and protective layers disposed respectively on both sides of the resin layer in contact with the resin layer is described in detail as a specific example with reference to the drawings.

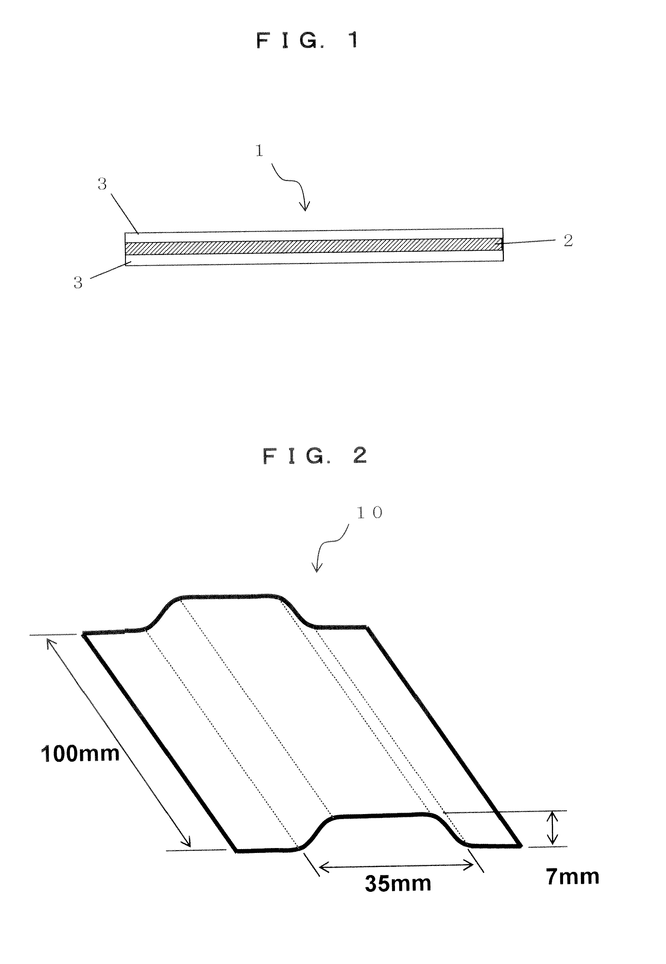

FIG. 1 is a sectional view schematically showing a cross section of a sheet material 1, when cut in the thickness direction, which includes protective layers 3 disposed respectively on both sides of a resin layer 2. As shown in FIG. 1, the sheet material 1 is formed by bonding two layers of the protective layers 3 via the resin layer 2 in the form of a sheet, in which the two layers of the protective layers 3 are disposed in contact respectively with both surfaces of the resin layer 2. That is, the resin layer 2 and the protective layers 3 are stacked in contact with one another.

A value obtained by multiplying tensile elastic modulus (MPa) and thickness (mm) of the sheet material 1 is preferably not more than 750 MPa·mm, more preferably not more than 600 MPa·mm, When the value is not more than 750 MPa·mm, there is an advantage that the layer separation between the resin layer 2 and each protective layer 3 is suppressed because the resin layer deforms corresponding to the force applied during the process of bending the sheet material 1. Further, the value obtained by multiplying the tensile elastic modulus (MPa) and the thickness (mm) is preferably at least 100 MPa·mm, in that the sheet material 1 can maintain the given shape after the process.

The tensile elastic modulus is determined by performing a tensile test at 23°C according to JIS K7161. Specifically, the determination is made by a measurement method mentioned later in Examples.

The resin layer 2 has a sheet shape, and contains a thermoplastic resin having nitrogen or sulfur in a molecule. The resin layer 2 may contain thermoplastic resins other than the thermoplastic resin having nitrogen or sulfur in a molecule.

Examples of the thermoplastic resin having nitrogen (N) in a molecule include a polyamide resin; a polyetherimide (PEI) resin having a plurality of aromatic hydrocarbons, imide bonds, and ether bonds in a molecule; a thermoplastic polyamide-imide resin having a plurality of imide bonds and a plurality of amide bonds in a molecule; and an aromatic-containing vinyl resin such as a copolymer of acrylonitrile, butadiene, and styrene (ABS resin). Among these, the polyamide resin is preferable in that good formability is imparted to the resin layer 2 in the process of three-dimensionally forming the sheet material 1.

Examples of the thermoplastic resin having sulfur (S) in a molecule include a polysulfone resin; and a polyphenylene sulfide (PPS) resin having a plurality of aromatic hydrocarbons and a plurality of sulfide bonds (-S-) in a molecule.

Examples of the thermoplastic resin having nitrogen or sulfur in a molecule also include a thermoplastic elastomer resin having a nitrogen (N)-containing polar functional group or a sulfur (S)-containing polar functional group in a molecule and showing rubber-like elasticity at room temperature (20°C).

Examples of the nitrogen (N)-containing polar functional group include -NRR', -NHR, -NH₂, >C=N-, -CN, -NCO, -OCN, -SCN, -NO, -NO₂, -CONH₂, -CONHR, -CONH-, and >C=NH. Among these, an isocyanate group (-NCO), or an amino group such as -NRR', -NHR, and -NH₂ is preferable.

Examples of the sulfur (S)-containing polar functional group include -SH, -SO₃H, -SO₂H, -SOH, >C=S, -CH=S, and -CSOR.

It should be noted that R, R' in the above-mentioned functional group denotes a hydrogen atom, an alkyl group, an aryl group, or the like.

Specific examples of the thermoplastic elastomer resin include a polyurethane thermoplastic elastomer resin, a nitrile thermoplastic elastomer resin, and a polyamide thermoplastic elastomer resin.

As the thermoplastic resin, a polyamide resin mentioned above as the thermoplastic resin having nitrogen in a molecule, or a polysulfone resin or a polyphenylene sulfide resin mentioned above as the thermoplastic resin having sulfur in a molecule is preferable in that the layer separation between the resin layer 2 and each protective layer 3 in the process of bending the sheet material 1 is more suppressed. That is, at least one selected from the group consisting of the polyamide resin, the polysulfone resin, and the polyphenylene sulfide resin is preferable as the thermoplastic resin.

Specifically, it is preferable for the resin layer 2 to contain the polyamide resin, in that the layer separation between the resin layer 2 and each protective layer 3 in the process of bending the sheet material 1 is more suppressed. Further, it is more preferable to contain the polysulfone resin.

When the thermoplastic resin contains a polyamide resin having comparatively high polarity, the resin layer 2 can be brought into closer contact with the protective layer 3, and there is therefore an advantage that the layer separation between the resin layer 2 and each protective layer 3 is more suppressed. Further, when the thermoplastic resin further contains the polysulfone resin, the resin layer 2 is more ensured to have fluidity, and there is therefore an advantage that the shape transferability when forming the sheet material 1 into a three-dimensionally shaped product is more enhanced. There is also an advantage that the heat resistance of the resin layer 2 is more enhanced, specifically, the three-dimensionally shaped electrically insulating product, for example, when used as a bobbin for motors is made more resistant to heat generated from the coil while maintaining the electrical insulation properties.

Such polyamide resin is formed by polymerization through dehydration condensation of at least a polyamine compound and a polycarboxylic acid compound.

Examples of the polyamide resin include an aromatic polyamide resin having an aromatic hydrocarbon in a molecule, and an aliphatic polyamide resin having exclusively an aliphatic hydrocarbon as a hydrocarbon in a molecule. Among these, the aromatic polyamide resin having an aromatic hydrocarbon in a molecule is preferable in that the heat resistance of the resin layer 2 is more enhanced. When the polyamide resin is an aromatic polyamide resin having an aromatic hydrocarbon in a molecule, there is specifically an advantage, for example, that the three-dimensionally shaped electrically insulating product when serving as a bobbin for motors is made more resistant to heat generated from the coil while maintaining the electrical insulation properties.

Examples of the aromatic polyamide resin having an aromatic hydrocarbon in a molecule include a fully aromatic polyamide resin having exclusively an aromatic hydrocarbon as a hydrocarbon in a molecule, and a semi-aromatic polyamide resin having both an aliphatic hydrocarbon and an aromatic hydrocarbon as hydrocarbons in a molecule.

As the aromatic polyamide resin having an aromatic hydrocarbon in a molecule, the semi-aromatic polyamide resin is preferable in that the resin layer 2 is allowed to have excellent heat resistance and made difficult to separate from each protective layer 3.

As a specific example of the polyamine compound used for polymerization of the polyamide resin, there can be mentioned diamine compounds.

Examples of the diamine compounds include an aliphatic diamine containing a straight chain or branched chain hydrocarbon group, an alicyclic diamine containing a cyclic saturated hydrocarbon group, and an aromatic diamine containing an aromatic hydrocarbon group.

Examples of the aliphatic diamine, the alicyclic diamine, or the aromatic diamine include those represented by Formula (1) below. In the following Formula (1), R₁ denotes an aliphatic hydrocarbon group having a carbon number of 4 to 12, an alicyclic hydrocarbon group having a carbon number of 4 to 12 and containing a cyclic saturated hydrocarbon, or a hydrocarbon group containing an aromatic ring.

H₂N-R₁-NH₂ (1)

As the aliphatic diamine, nonanediamine in which R₁ in Formula (1) has a carbon number of 9 is preferable, and a mixture of 1,9-nonanediamine and 2-methyl-1,8-octanediamine is more preferable, in that the electrical insulation properties of the resin layer 2 can be more enhanced.

Examples of the aromatic diamine include phenylenediamine and xylylenediamine.

As a specific example of the polycarboxylic acid compound used for polymerization of the polyamide resin, there can be mentioned dicarboxylic acid compounds.

Examples of the dicarboxylic acid compounds include aliphatic dicarboxylic acid containing a straight chain or branched chain hydrocarbon group, alicyclic dicarboxylic acid containing a cyclic saturated hydrocarbon group, and aromatic dicarboxylic acid containing an aromatic hydrocarbon group.

Examples of the aliphatic dicarboxylic acid, the alicyclic dicarboxylic acid, or the aromatic dicarboxylic acid include those represented by Formula (2) below. In the following Formula (2), R₂ denotes an aliphatic hydrocarbon group having a carbon number of 4 to 25, an alicyclic hydrocarbon group having a carbon number of 4 to 12 and containing a cyclic saturated hydrocarbon, or a hydrocarbon group containing an aromatic ring.

HOOC-R₂-COOH (2)

As the aliphatic dicarboxylic acid, there can be mentioned adipic acid and sebacic acid, for example.

Examples of the aromatic dicarboxylic acid include terephthalic acid, methylterephthalic acid, and naphthalenedicarboxylic acid. As the aromatic dicarboxylic acid, terephthalic acid is preferable in that the heat resistance of the polyamide resin can be more enhanced.

The polyamide resin may be formed by polymerization of one of the above-mentioned diamine compounds and one of the above-mentioned dicarboxylic acid compounds, or may be formed by polymerization of two or more kinds of the respective compounds in combination. In short, it may be formed by additional polymerization of materials other than the diamine compounds and the dicarboxylic acid compounds.

As mentioned above, it is preferable that the polyamide resin be a semi-aromatic polyamide resin, it is more preferable that the semi-aromatic polyamide resin be formed by polymerization of an aliphatic diamine as a diamine compound and an aromatic dicarboxylic acid as a dicarboxylic acid compound, and it is particularly preferable that the semi-aromatic polyamide resin be formed by polymerization of nonanediamine as an aliphatic diamine and terephthalic acid as an aromatic dicarboxylic acid (PA9T).

In the resin layer 2, the content of the polyamide resin is preferably at least 1 wt%, more preferably at least 10 wt%. Further, such content is preferably not more than 90 wt%, more preferably not more than 70 wt%.

When the content of the polyamide resin is at least 1 wt%, there is an advantage that the layer separation between the resin layer 2 and each protective layer 3 in the process of bending the sheet material 1 is more suppressed. Further, when the content of the polyamide resin is not more than 90 wt%, the resin layer 2 is more ensured to have fluidity in the bending process such as drawing, and there is therefore an advantage that the shape transferability when forming the sheet material 1 into a three-dimensionally shaped product is more enhanced.

The polysulfone resin has a plurality of sulfonyl groups in a molecule. That is, the polysulfone resin has a molecular structure containing a plurality of sulfonyl groups (-SO₂-).

Examples of the polysulfone resin include a polyether sulfone resin in which the polysulfone resin further has a plurality of ether bonds (-O-) in a molecule and a polyphenylsulfone resin in which the polysulfone resin further has a plurality of aromatic hydrocarbons in a molecule. Examples of the polysulfone resin also include a polyether polyphenylsulfone resin in which the polysulfone resin further has a plurality of ether bonds and a plurality of aromatic hydrocarbons in a molecule.

As the polysulfone resin, a polyether sulfone resin or a polyphenylsulfone resin is preferable, among which the polyether polyphenylsulfone resin is more preferable, in that good formability is imparted to the resin layer 2 in the process of three-dimensionally forming the sheet material 1.

Preferable examples of the polyether polyphenylsulfone resin include those having a molecular structure represented by the following Formula (3).

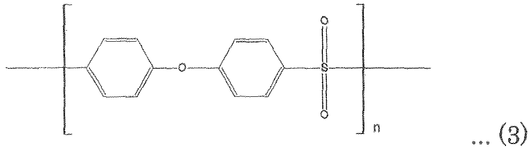

In Formula (3), n is a positive integer that represents a polymerization degree, which is generally in the range of 10 to 5000.

As the polyether polyphenylsulfone resin, those commercially available can be used. Examples thereof include "ULTRASON E Series" manufactured by BASF SE, "RADEL A Series" manufactured by Solvay S.A., and "SUMIKAEXCEL Series" manufactured by Sumitomo Chemical Company, Limited.

In the resin layer 2, the content of the polysulfone resin is preferably at least 20 wt%, more preferably at least 40 wt%. Further, the content of the polysulfone resin is preferably not more than 90 wt%, more preferably not more than 70 wt%.

When the content of the polysulfone resin is at least 20 wt%, there is an advantage that the heat resistance of the resin layer 2 is more enhanced. Further, when the content of the polysulfone resin is not more than 90 wt%, the resin layer 2 can be brought into closer contact with the protective layer 3, and there is therefore an advantage that the layer separation between the resin layer 2 and each protective layer 3 is more suppressed.

The above-mentioned other thermoplastic resins are not specifically limited. Examples thereof include a polyacetal (POM) resin having a plurality of oxymethylene (-CH₂O-) groups in a molecule; a thermoplastic polyhydroxy polyether phenoxy resin formed by reaction of bisphenols and epichlorohydrin; a polyphenylene oxide (PPO) resin such as a polyphenylene ether (PPE) resin formed by repetition of the basic structure of aromatic hydrocarbon-ether bond in a molecule; an aromatic polyether ketone (PEK) resin formed by repetition of the basic structure of aromatic hydrocarbon-ether bond-aromatic hydrocarbon-ketone bond in a molecule; an aromatic polyetheretherketone (PEEK) resin formed by repetition of the basic structure of aromatic hydrocarbon-ether bond-aromatic hydrocarbon-ether bond-aromatic hydrocarbon-ketone bond in a molecule; a polyolefin resin such as polyethylene, polypropylene, and polycycloolefin; a polyester resin such as a polyethylene naphthalate (PEN) resin, a polybutylene terephthalate (PBT) resin, and a polyethylene terephthalate (PET) resin; a polycarbonate (PC) resin; and a liquid crystal polymer (LCP).

In addition, as the above-mentioned other thermoplastic resins, there can be mentioned a thermoplastic elastomer resin that exhibits rubber-like elasticity at room temperature (20°C).

Examples of the thermoplastic elastomer resin include a polyolefin thermoplastic elastomer resin and a polyester thermoplastic elastomer resin, specifically, a polybutadiene thermoplastic elastomer, a styrene-butadiene thermoplastic elastomer, and a styrene·isoprene block copolymer.

Examples of the thermoplastic elastomer resin include those having a polar functional group, such as -COOH (carboxyl group), an acid anhydride group of carboxyl group, -OH, >C=O, -CH=O, -COOR (where R denotes a hydrogen atom, an alkyl group, an aryl group, or the like), an epoxy group, and a halogen group, in a molecule.

As the polar functional group, a carboxyl group, an acid anhydride group of carboxyl group, or a hydroxy group (-OH), for example, is preferable, the acid anhydride group of carboxyl group is more preferable, and an acid anhydride of maleic acid (maleic acid anhydride group) is further preferable.

As the thermoplastic elastomer resin, a thermoplastic elastomer resin having a polar functional group in a molecule is preferable, and a maleic acid anhydride-modified polyolefin thermoplastic elastomer is more preferable, in that the tensile elastic modulus of the sheet material 1 is more reduced and the formability in the process of three-dimensionally forming the sheet material 1 is enhanced.

As the maleic acid anhydride-modified polyolefin thermoplastic elastomer, ethylene-propylene maleic acid anhydride-modified copolymer is preferable in that better formability is imparted to the resin layer 2 in the process of three-dimensionally forming the sheet material 1.

In the resin layer 2, the content of the thermoplastic elastomer resin is preferably at least 0.1 wt%, more preferably at least 0.5 wt%. Further, the content of the thermoplastic elastomer resin is preferably not more than 5.0 wt%, more preferably not more than 4.0 wt%.

When the content of the thermoplastic elastomer resin is at least 0.1 wt%, the tensile elastic modulus of the sheet material 1 is more reduced, and there is therefore an advantage that the formability in the process of three-dimensionally forming the sheet material 1 is more enhanced. Further, when the content of the thermoplastic elastomer resin is not more than 5.0 wt%, there is an advantage that more excellent heat resistance can be imparted to the resin layer 2.

The thickness of the resin layer 2 is not specifically limited, and generally is 1 µm to 500 µm.

In the resin layer 2, various additives may be contained as long as the effects of the present invention are not impaired.

Examples of such additives include components commonly contained in plastics, i.e., tackifiers such as an alkyl phenol resin, an alkyl phenol-acetylene resin, a xylene resin, a coumarone-indene resin, a terpene resin, and rosin; brominated flame retardants such as polybromodiphenyl oxide and tetrabromobisphenol A; chlorine flame retardants such as chlorinated paraffin and perchlorocyclodecane; phosphorus flame retardants such as phosphate ester and halogen-containing phosphate ester; boron flame retardants; oxide flame retardants such as antimony trioxide; hydrated metal compounds such as aluminum hydroxide and magnesium hydroxide; phenolic, phosphorus, or sulfur antioxidants; inorganic fillers such as silica, clay, calcium carbonate, barium carbonate, strontium carbonate, aluminum oxide, magnesium oxide, boron nitride, silicon nitride, and aluminum nitride; inorganic fibers such as glass fiber; thermal stabilizers; light stabilizers; ultraviolet absorbers; lubricants; pigments; crosslinking agents; crosslinking aids; silane coupling agents; and titanate coupling agents. In addition, there can be mentioned aromatic polyamide fibers and montmorillonite having a particle size of several nm to several hundred nm, for example. These additives may be used in an amount, for example, of 0.1 to 5 parts by weight with respect to 100 parts by weight of the thermoplastic resin.

The protective layer 3 protects the resin layer 2. In the sheet material 1, the presence of the protective layer 3 disposed on each of both sides of the resin layer 2 prevents the surfaces of the resin layer 2 from being damaged by the bending process in the three-dimensional formation of the sheet material 1.

The protective layer 3 is not specifically limited as long as it is in the form of a sheet.

The thickness of the protective layer 3 is also not specifically limited, and generally is 10 to 100 µm.

Examples of the protective layer 3 include a nonwoven fabric, paper, and a film. As the protective layer 3, a nonwoven fabric or paper is preferable in that the electrical insulation properties of the three-dimensionally shaped electrically insulating product are more enhanced.

As the protective layer 3, there can be mentioned those fabricated by a wet papermaking process and those fabricated by a dry process in the atmosphere, for example.

As the protective layer 3, paper fabricated by a wet papermaking process is preferable in that the electrical insulation properties of the three-dimensionally shaped electrically insulating product are more enhanced.

Examples of the material for the protective layer 3 include synthetic polymer compounds such as polyamide and polyester, and natural polymer compounds such as cellulose. Among these, polyamide or polyester is preferable in that the three-dimensionally shaped electrically insulating product is allowed to have excellent electrical insulation, and the layer separation between the resin layer 2 and each protective layer 3 in the process of bending the sheet material 1 is more suppressed.

Examples of the polyamide include fully aromatic polyamide all constituent monomers of which each have an aromatic hydrocarbon, aliphatic polyamide all constituent monomers of which each have exclusively an aliphatic hydrocarbon, and semi-aromatic polyamide some constituent monomers of which each have an aromatic hydrocarbon. Among these, fully aromatic polyamide is preferable in that the three-dimensionally shaped electrically insulating product is allowed to have excellent electrical insulation, and the layer separation between the resin layer 2 and each protective layer 3 in the process of bending the sheet material 1 is further suppressed. That is, the protective layer 3 preferably contains fully aromatic polyamide.

As the protective layer 3, fully aromatic polyamide paper containing fully aromatic polyamide fibers is further preferable in that the electrical insulation properties of three-dimensionally shaped electrically insulating product is more enhanced. That is, fully aromatic polyamide paper fabricated using fully aromatic polyamide fibers by a wet papermaking process is further preferable.

Examples of the fully aromatic polyamide paper include those mainly composed of fully aromatic polyamide fibers obtained by fiberization of a condensation polymer of phenylenediamine and phthalic acid (fully aromatic polyamide), which polymer is composed of benzene rings except its amide group moiety.

It is preferable that the fully aromatic polyamide paper have a basis weight of at least 5 g/m² in that excellent mechanical properties and good handleability in the process of producing the three-dimensionally shaped electrically insulating product are obtained. When the basis weight is at least 5 g/m², the mechanical strength is suppressed from being insufficient, and there is therefore an advantage that the three-dimensionally shaped electrically insulating product is less likely to fracture during the production process.

To the fully aromatic polyamide paper, may be added other components, as long as the effects of the present invention are not impaired. Examples of such other components include organic fibers such as polyphenylene sulfide fibers, polyetheretherketone fibers, polyester fibers, arylate fibers, liquid crystal polyester fibers, and polyethylene naphthalate fibers; and inorganic fibers such as glass fibers, rock wool, asbestos, boron fibers, and alumina fibers.

As the fully aromatic polyamide paper, "Nomex" (product name) commercially available from DuPont can be used, for example.

Meanwhile, examples of the polyester as the material for the protective layer 3 include polyethylene terephthalate, polyethylene naphthalate, polytrimethylene terephthalate, and polybutylene terephthalate. As the polyester, polyethylene terephthalate is preferable because of its excellent flexibility, and in that the layer separation between the resin layer 2 and each protective layer 3 in the process of bending the sheet material 1 is further suppressed. That is, the protective layer 3 preferably contains polyethylene terephthalate, and the protective layer 3 is preferably polyethylene terephthalate paper containing polyethylene terephthalate fibers.

As the polyethylene terephthalate paper, "Nomex LT" (product name) commercially available from DuPont, can be used, for example.

A surface on the resin layer 2 side of the protective layer 3 is preferably subjected to corona treatment. Such corona treatment brings about an advantage that the layer separation between the resin layer 2 and each protective layer 3 can be more suppressed.

The corona treatment is a surface roughening treatment performed by subjecting one surface of the protective layer 3 that is in contact with the resin layer 2 to electric discharge, thereby producing carboxyl groups or hydroxyl groups that have a polarity thereon. For the corona treatment, conventionally known common technique can be employed.

The sheet material 1 is preferably configured so that the protective layer 3 is disposed on each of both surfaces of the resin layer 2 so as to be in contact therewith, and the layer adhesion force between the resin layer 2 and each protective layer 3 exceeds the cohesive fracture energy within each of the resin layer 2 and the protective layers 3. With such a configuration, the layer separation between the resin layer 2 and each protective layer 3 is suppressed.

The sheet material 1 generally exhibits a value of breakdown voltage (BDV), which is measured as an indicator of the electrical insulation properties according to JIS K6911, of at least 2 kV

The sheet material 1 preferably does not include a layer containing a resin cured by molecular crosslinking. That is, the sheet material 1 preferably does not include a layer containing a resin cured by three-dimensional crosslinking. When such a layer is not included, there is an advantage that the shape transferability in the process of bending the sheet material 1 is more enhanced.

The resin layer 2 preferably has a melting point not higher than the melting point of the protective layer 3 in the sheet material 1. When the resin layer 2 has a melting point not higher than the melting point of the protective layer 3, thermal deformation of the resin layer 2 is more ensured, for example, in the bending process such as drawing accompanied by heating, and there is therefore an advantage that the resin layer 2 is more ensured to have fluidity. Further, there is an advantage that the sheet material 1 is allowed to have more excellent dimensional stability after the bending process such as drawing.

The sheet material 1 is preferably configured so that the protective layer 3 contains such a synthetic polymer compound as mentioned above, and at least one of the constitutional units that constitute the thermoplastic resin contained in the resin layer 2 is the same as at least one of the constitutional units that constitute the synthetic polymer compound contained in the protective layer 3. Specifically, the at least one of the constitutional units that constitute the thermoplastic resin and the at least one of the constitutional units that constitute the synthetic polymer compound, which are respectively contained in the resin layer 2 and the protective layer 3, are both preferably an amide group, a carboxyl group, or a hydroxy group, more preferably an amide group.

Next, the three-dimensionally shaped electrically insulating product is described with reference to the drawings. FIG. 2 is a perspective view of one specific example of the three-dimensionally shaped electrically insulating product when viewed at an angle from above.

As shown in FIG. 2, in a three-dimensionally shaped electrically insulating product 10, the sheet material 1 is formed into a three-dimensional shape by being subjected at least to a bending process.

Specific examples of the three-dimensionally shaped electrically insulating product 10 include those obtained by subjecting the sheet material 1 having a rectangular shape when viewed from above to a bending process such as drawing in such a manner that the end portions along the opposite sides of the sheet material 1 are bent along such sides, as shown in FIG. 2.

As the three-dimensionally shaped electrically insulating product 10, those formed into a three-dimensional shape by bending without bonding a plurality of the sheet material 1 are preferable. That is, those obtained by three-dimensionally forming one piece of the sheet material 1 by a bending process such as drawing are preferable. When one piece of the sheet material 1 is three-dimensionally formed, there is no portion where pieces of the sheet material 1 are bonded to each other, and thus no separation occurs in such bonded portions. Specifically, for example, the three-dimensionally shaped electrically insulating product 10 obtained by three-dimensionally forming one piece of the sheet material 1 when used for electrical insulation in a motor coil undergoes no separation, for example, due to heat from the motor coil or vibration of the motor in bonded portions. Accordingly, no electric leakage resulting from the separation in such bonded portions occurs, which further enhances the electrical insulation properties of the three-dimensionally shaped electrically insulating product 10 by the extent of having no bonded portions.

The three-dimensionally shaped electrically insulating product 10 generally exhibits a value of breakdown voltage (BDV), which is measured as an indicator of the electrical insulation properties according to JIS K6911, of at least 2 kV.

The three-dimensionally shaped electrically insulating product 10 is preferably used for electrical insulation in a motor coil.

Next, a method for producing the three-dimensionally shaped electrically insulating product 10 is described.

The three-dimensionally shaped electrically insulating product 10 can be produced by fabricating the sheet material 1 and thereafter bending the sheet material 1.

The resin layer 2 of the sheet material 1 can be fabricated by stirring such a thermoplastic resin as mentioned above under heating to a specific temperature and then forming it into a sheet by a conventionally known common method. Specifically, it can be fabricated, for example, by stirring the thermoplastic resin under heating using a common mixing means such as a kneader, a pressure kneader, a roll kneader, a Banbury mixer, and a twin-screw extruder, and then extruding it into a sheet using an extruder provided with a T-die.

As the protective layer 3 of the sheet material 1, commercially available paper or nonwoven fabric in the form of a sheet can be used, for example.

The sheet material 1 can be fabricated, for example, by pressing two pieces of the protective layer 3 with the resin layer 2 interposed therebetween.

Then, the three-dimensionally shaped electrically insulating product 10 can be produced by bending the sheet material 1 into a three-dimensional shape using various methods.

Specific examples of the methods for bending the sheet material 1 include folding and drawing. In the drawing process, heat pressing, vacuum forming, pressure forming, vacuum pressure forming, or the like, can be employed, for example.

The three-dimensionally shaped electrically insulating product 10 can be produced simultaneously with the fabrication of the sheet material 1. That is, the sheet material 1 is fabricated into a specific three-dimensional shape, thereby allowing the three-dimensionally shaped electrically insulating product 10 having the three-dimensional shape to be produced.

The three-dimensionally shaped electrically insulating product 10 can be used, for example, in an electrically insulating member for motors in automobiles, etc., an electrically insulating member for transformers, and an electrically insulating member for bus bars, making use of its electrical insulation properties.

The three-dimensionally shaped electrically insulating product of this embodiment is configured as described above as examples; however, the present invention is not limited to the above-described examples of the three-dimensionally shaped electrically insulating product and the electrically insulating sheet material.

Further, various embodiments used for common three-dimensionally shaped electrically insulating products and electrically insulating sheet materials can be employed as long as the effects of the present invention are not impaired.

For example, the above-mentioned embodiments describes the three-dimensionally shaped electrically insulating product obtained by three-dimensionally forming a sheet material (shown in FIG. 1) in which one protective layer is disposed on each of both sides of the resin layer in the form of a sheet. However, the present invention is not limited to these embodiments. The three-dimensionally shaped electrically insulating product may be obtained by three-dimensionally forming a sheet material including a plurality of resin layers interposed between two protective layers.

### EXAMPLES

Next, the present invention is described further in detail by way of examples. However, the present invention is not limited to these examples.

### (Example 1)

First, the following raw materials were prepared.
- Polyamide (PA) resin
   (Product name: "Zytel HTN501", manufactured by DuPont; Constituent monomers: hexamethylenediamine, 2-methylpentamethylenediamine, and terephthalic acid)
- Thermoplastic polyhydroxy polyether phenoxy resin
   (Product name "Phenotohto YP-50S", manufactured by Tohto Kasei Co., Ltd., with a weight-average molecular weight of 52000, obtained by reaction between bisphenols and epichlorohydrin)

Next, the raw materials were mixed at 310°C and a weight ratio of "Zytel HTN501" (PA resin) / "Phenotohto YP-50S" (polyhydroxy polyether phenoxy resin) = 60 / 40, using a twin-screw kneader (manufactured by TECHNOVEL CORPORATION) at 310°C. Thus, a resin mixture was prepared.

Subsequently, the resin mixture was formed into a 70-µm thick sheet by extrusion molding. Thus, a resin layer was formed.

Meanwhile, two pieces of fully aromatic polyamide paper (product name "Nomex T410", manufactured by DuPont, with a thickness of 50 µm) were prepared as the protective layers. Further, the surface of each protective layer on the side in contact with the resin layer was subjected to corona treatment. The corona treatment was performed using "500 Series", manufactured by PILLAR TECHNOLOGIES as an equipment under the atmospheric pressure and conditions of an output of 500 W, a treatment speed of 4 m/minute, and a sample width of 0.4 m.

The thus fabricated resin layer on both sides of which two pieces of fully aromatic polyamide paper are respectively disposed is interposed between two metal plates, which is then pressed at a pressure of 200 N/cm² for 60 seconds using a heat pressing machine heated to 350°C. Thus, a 170-µm thick sheet material in which the two pieces of protective layers were respectively disposed on both sides of the resin layer was fabricated.

The thus fabricated sheet material was subjected to drawing using a vacuum pressure forming machine (manufactured by TOKO CO., LTD), thereby forming the sheet material into a three-dimensional shape. The process conditions were: a heating temperature of 400°C; a pressure of 0.08 MPa; a drawing depth of 7 mm; and a width of 35 mm. In this way, a three-dimensionally shaped electrically insulating product having the shape shown in FIG. 2 was produced.

### (Example 2)

First, the following raw materials were prepared.
- Polysulfone resin: Polyether polyphenylsulfone (PES) resin (Product name "RADEL -300A", manufactured by Solvay S.A., having a plurality of sulfonyl groups, ether bonds, and aromatic hydrocarbons in a molecule, with a molecular structure represented by Formula (3))
- A mixture of a maleic acid anhydride-modified polyolefin thermoplastic elastomer at a 5 wt% concentration and a polyamide (PA) resin at a 95 wt% concentration
(Product name "GENESTAR N1001A", manufactured by KURARAY CO., LTD.; Maleic acid anhydride-modified polyolefin thermoplastic elastomer: Ethylene-propylene maleic acid anhydride-modified copolymer (EPMA); PA resin: PA9T having a terephthalic acid unit and a nonanediamine unit in a molecule)

Next, the raw materials were mixed, using a twin-screw kneader (manufactured by TECHNOVEL CORPORATION), at 310°C so that the PES resin, the PA resin, and the EPMA have a weight ratio of PES/PA/EPMA= 80/19/1. Thus, a resin mixture was prepared.

Subsequently, the resin mixture was formed into a 100-µm thick sheet by extrusion molding at 310°C. Thus, a resin layer was formed.

Thereafter, a 200-µm thick sheet material was fabricated in the same manner as in Example 1, and then a three-dimensionally shaped electrically insulating product was produced in the same manner as in Example 1.

### (Example 3)

Using a 200-µm thick sheet material (product name "NSN242", manufactured by Kawamura Sangyo Co.,Ltd.) formed by bonding two pieces of fully aromatic polyamide paper (product name "Nomex T410", manufactured by DuPont, with a thickness of 50 µm) as the protective layers respectively to both sides of a polyphenylene sulfide (PPS) resin film (100-µm thick) having a plurality of aromatic hydrocarbons and a plurality of sulfide bonds (-S-) in a molecule, a three-dimensionally shaped electrically insulating product was produced in the same manner as in Example 1.

### (Example 4)

A three-dimensionally shaped electrically insulating product was produced in the same manner as in Example 1 except that a resin layer fabricated in the same manner as in Example 2 was used, and two pieces of polyethylene terephthalate paper (product name "Nomex LT", manufactured by DuPont, with a thickness of 60 µm) were used as the protective layers.

### (Comparative Example 1)

The following raw materials were prepared.
- Polyethylene naphthalate (PEN) film
   (Product name "Teonex Q51 125 µm", manufactured by Teijin DuPont Films Japan Limited)
- Adhesive agent: Crosslinked polyacrylic adhesive (manufactured by NITTO SHINKO CORPORATION)
- Fully aromatic polyamide paper
   (Product name "Nomex T410", manufactured by DuPont, with a thickness of 50 µm)

The above-mentioned adhesive agent was applied to each of both surfaces of the above-mentioned film so that the thickness after curing should be 30 µm, followed by drying at 120°C for 3 minutes. Further, the above-mentioned polyamide paper was attached thereto, which was then pressurized under pressurizing conditions of 90°C and 0.2 MPa. Then, the adhesive agent was cured under curing conditions of allowing 24 hours to elapse at 130°C. Thus, a 285-µm thick sheet material was fabricated.

The thus fabricated sheet material was formed into a three-dimensional shape in the same manner as in Example 1. Thus, a three-dimensionally shaped product was produced.

### (Comparative Example 2)

A 255-µm thick sheet material was fabricated in the same manner as in Comparative Example 1, except that the same PEN film but with a thickness of 75 µm was used, the same polyamide paper but with a thickness of 75 µm was used, and the above-mentioned adhesive agent was applied so that the thickness after curing should be 15 µm. Then, the sheet material was formed into a three-dimensional shape in the same manner as in Example 1. Thus, a three-dimensionally shaped product was produced.

### (Comparative Example 3)

A 255-µm thick sheet material was fabricated in the same manner as in Comparative Example 1, except that the same PEN film but with a thickness of 75 µm was used, the same polyamide paper but with a thickness of 75 µm was used, and an adhesive agent was applied so that the thickness after curing should be 15 µm.

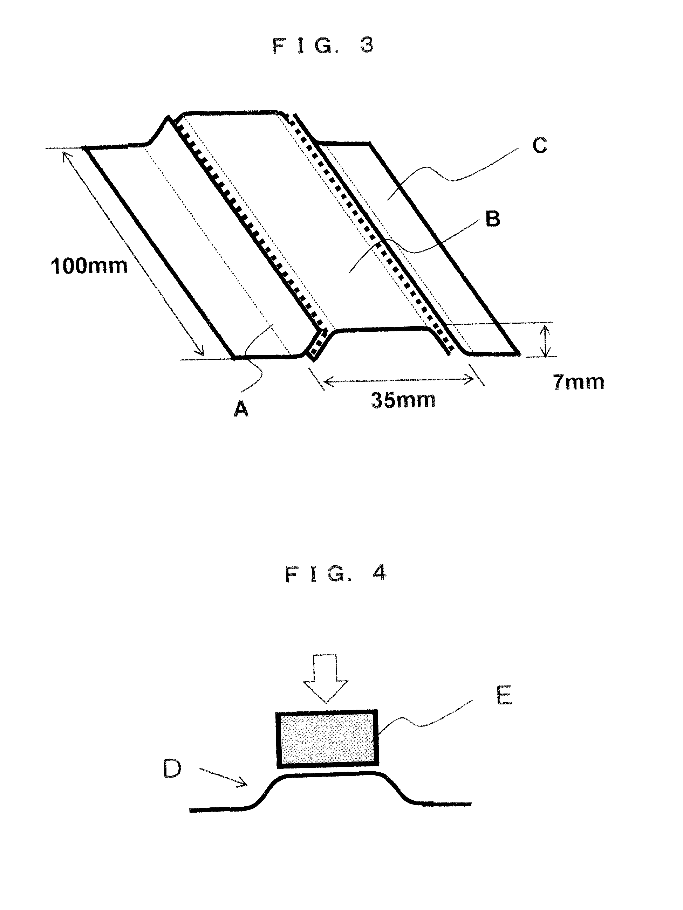

Further, the produced sheet material was cut into an appropriate size, which was then formed under vacuum in the same manner as above. Thus, sheet materials A, B, and C as shown in FIG. 3 were prepared. The respective sheet materials were arranged as shown in FIG. 3, and then were bonded to one another using the above-mentioned crosslinked polyacrylic adhesive under the same pressurizing and curing conditions as in Comparative Example 1.

### <Measurement of tensile elastic modulus of sheet materials>

The tensile elastic modulus in the extrusion direction (MD direction) and the orthogonal direction (TD direction) of each sheet material was measured, according to JIS K7161, at 23°C under the tensile conditions of a tensile speed of 200 mm/minute and a gauge length of 100 mm. The value of tensile elastic modulus × thickness (MPa·mm) was calculated by multiplying the measured tensile elastic modulus by the thickness of the sheet material.

### <Evaluation of shape transferability>

The accuracy of the shape transferred to the formed sheet material was observed by visual inspection. Thus, the formability was evaluated.
Shape entirely transferred: Good
Shape partially transferred: Slightly poor
Shape not transferred: Poor

### <Evaluation of layer separation>

The appearance of the formed sheet material was observed by visual inspection to check the degree of layer separation. Thus, the formability was evaluated.
No layer separation occurred: Good
Lifting or wrinkling partially occurred: Slightly poor
Lifting or wrinkling entirely occurred: Poor

### <Evaluation of resistance to deformation under load>

The produced three-dimensionally shaped product was set as shown in FIG. 4, which was allowed to stand at 200°C for one hour with a load (E) of 500 g applied from above. Thereafter, the appearance was observed by visual inspection.
No deformation occurred: Good
Deformation or lifting in bonded portions partially occurred: Slightly poor
Deformation or lifting in bonded portions entirely occurred: Poor

### <Evaluation of breakdown voltage (BDV) retention>

The breakdown voltage (BDV) in the inclined portion denoted by D in FIG. 4 was measured, according to JIS K6911, for each three-dimensionally shaped product before and after the above-mentioned test for the resistance to deformation under load.

Calculation was carried out taking, as an initial value, the BDV value before the test for the resistance to deformation under load, and taking, as a BDV retention, a ratio of the BDV value after the test for the resistance to deformation under load with respect to the initial value.

Table 1 shows the results of the respective evaluation tests.

**Table 1**

| | EX. 1 | EX. 2 | EX. 3 | EX. 4 | C. EX. 1 | C. EX. 2 | C. EX. 3 |
|---|---|---|---|---|---|---|---|
| Total thickness of Sheet material (pm) | 170 | 200 | 200 | 220 | 285 | 255 | 255 |
| Forming method | Vacuum forming | Vacuum forming | Vacuum forming | Vacuum forming | Vacuum forming | Vacuum forming | Bonding |
| Tensile elastic modulus × Thickness of Sheet material (MPa · mm) MD | 527 | 505 | 615 | 468 | 1109 | 882 | 882 |
| Tensile elastic modulus × Thickness of Sheet material (MPa · mm) TD | 408 | 402 | 622 | 396 | 1023 | 773 | 773 |
| Shape transferability of Three-dimensionally shaped product | Good | Good | Good | Good | Poor | Slightly poor | Good |
| Layer separation between Sheet materials in Three-dimensionally shaped product | Good | Good | Good | Good | Poor | Poor | Good |
| Resistance to deformation under load of Three-dimensionally shaped product | Good | Good | Good | Good | Good | Good | Poor |
| BDV retention of Three-dimensionally shaped product (%) | 98 | 99 | 90 | 85 | 95 | 92 | 15 |

### (Example 5)

First, a 170-µm thick sheet material was fabricated in the same manner as in Example 1.

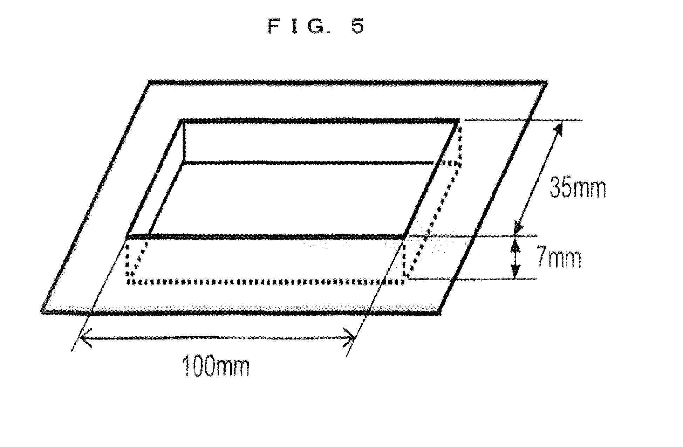

Next, the thus fabricated sheet material was subjected to drawing using a vacuum pressure forming machine (manufactured by TOKO CO., LTD), thereby forming the sheet material into a three-dimensional shape. The process conditions were: a heating temperature of 400°C; a pressure of 0.08 MPa; a drawing depth of 7 mm; a long side length of 100 mm; and a short side length of 35 mm. In this way, a three-dimensionally shaped electrically insulating product that had been three-dimensionally formed without bonding sheet materials was produced. That is, a three-dimensionally shaped electrically insulating product in the shape shown in FIG. 5, including a box member (F) having a bottom portion that is rectangular, when viewed from above, and sidewall portions extending upward from the end edges along the circumferential direction of the bottom portion, and a flange member (G) extending outward from the upper end edges along the circumferential direction of the box member was produced.

### (Example 6)

A three-dimensionally shaped electrically insulating product in the shape shown in FIG. 5 was produced in the same manner as in Example 5 except that a sheet material fabricated in the same manner as in Example 2 was used.

### (Comparative Example 4)

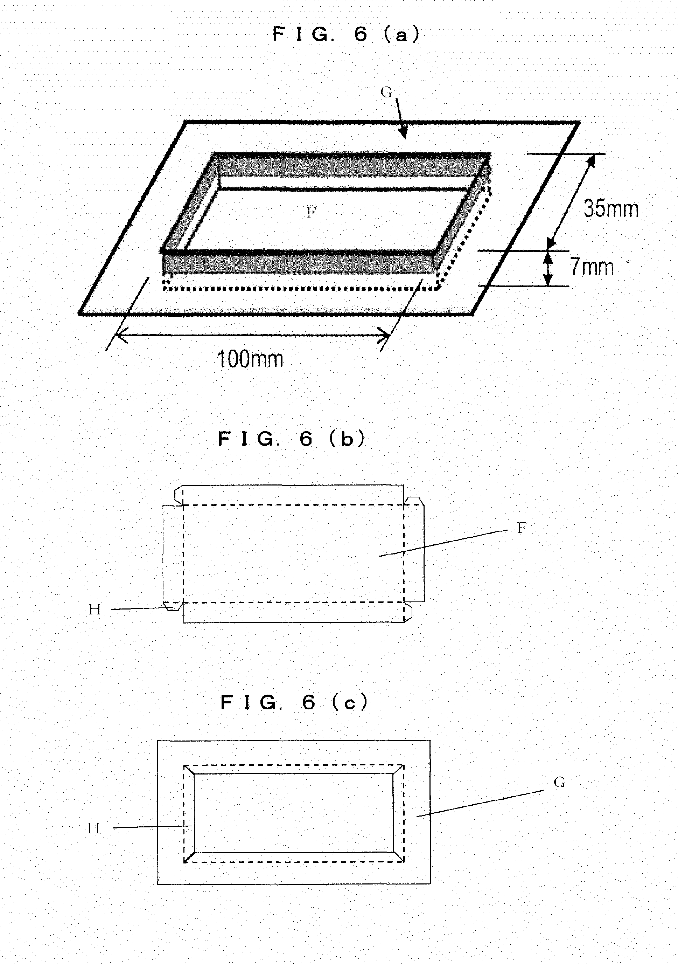

In order to produce a three-dimensionally shaped product by bonding the box member F and the flange member G constituting the three-dimensionally shaped product shown in FIG. 6(a) to each other, the sheet material fabricated in Comparative Example 3 was cut into an appropriate size. That is, the sheet material was cut out so as to have the shape shown in FIG. 6(b), which was folded along the dashed lines shown in FIG. 6(b). Then, each of adhesion portions H attached to the respective sidewall portions was bonded to its adjacent sidewall portion. Thus, the box member F was fabricated. Further, the sheet material was cut out into the shape shown in FIG. 6(c), which was folded along the dashed lines shown in FIG. 6(c). Then, adhesion portions H attached to the flange member were bonded to the internal sidewall portions of the box member F. Thus, a three-dimensionally shaped product was produced. It should be noted that the bonding was performed using the above-mentioned crosslinked polyacrylic adhesive applied to the adhesion portions H. Further, the three-dimensionally shaped product shown in FIG. 6 was produced so as to have almost the same shape and size as the three-dimensionally shaped product shown in FIG. 5.

The shape transferability, layer separation, resistance to deformation under load, and breakdown voltage retention were each evaluated for the three-dimensionally shaped products produced in Examples 5 and 6, and Comparative Example 4, in the same manner as above. Table 2 shows the results.

**Table 2**

| | EX. 5 | EX. 6 | C. EX. 4 |
|---|---|---|---|
| Total thickness of Sheet material (µm) | 170 | 200 | 255 |
| Forming method | Vacuum forming | Vacuum forming | Bonding |
| Tensile elastic modulus × Thickness of Sheet material (MPa • mm) MD | 527 | 505 | 882 |
| Tensile elastic modulus × Thickness of Sheet material (MPa • mm) TD | 408 | 402 | 773 |
| Shape transferability of Three-dimensionally shaped product | Good | Good | Good |
| Layer separation between Sheet materials in Three-dimensionally shaped product | Good | Good | Good |
| Resistance to deformation under load of Three-dimensionally shaped product | Good | Good | Poor |
| BDV retention of Three-dimensionally shaped product (%) | 98 | 99 | 15 |

### INDUSTRIAL APPLICABILITY

The three-dimensionally shaped electrically insulating product of the present invention can be used suitably as an electrically insulating member having a three-dimensional shape, etc. Specific examples of suitable applications include an electrically insulating member disposed around a coil wire for motors, an electrically insulating member for transformers, bus bars, capacitors, and cables, and an insulating member for electronic circuit substrates.

### REFERENCE SIGNS LIST

1: Sheet material
2: Resin layer
3: Protective layer
10: Three-dimensionally shaped electrically insulating product.

## Claims

1. A three-dimensionally shaped electrically insulating product formed by subjecting a sheet material having electrical insulation properties at least to a bending process, the sheet material comprising:
a resin layer in the form of a sheet containing a thermoplastic resin having nitrogen or sulfur in a molecule; and
a protective layer in the form of a sheet disposed on each of both sides of the resin layer.

2. The three-dimensionally shaped electrically insulating product according to claim 1, wherein
the resin layer contains, as the thermoplastic resin, at least one selected from the group consisting of a polyamide resin, a polysulfone resin, and a polyphenylene sulfide resin.

3. The three-dimensionally shaped electrically insulating product according to claim 2, wherein
the polyamide resin is an aromatic polyamide resin having an aromatic hydrocarbon in a molecule.

4. The three-dimensionally shaped electrically insulating product according to claim 2 or 3, wherein
the polysulfone resin is a polyether sulfone resin in which the polysulfone resin further has a plurality of ether bonds in a molecule.

5. The three-dimensionally shaped electrically insulating product according to any one of claims 2 to 4, wherein
the polysulfone resin is a polyphenylsulfone resin in which the polysulfone resin further has a plurality of aromatic hydrocarbons in a molecule.

6. The three-dimensionally shaped electrically insulating product according to any one of claims 1 to 5, wherein
the resin layer further contains a thermoplastic elastomer resin.

7. The three-dimensionally shaped electrically insulating product according to claim 6, wherein
the thermoplastic elastomer resin is a maleic acid anhydride-modified polyolefin thermoplastic elastomer.

8. The three-dimensionally shaped electrically insulating product according to any one of claims 1 to 7, wherein
a value obtained by multiplying tensile elastic modulus (MPa) and thickness (mm) of the sheet material is 100 MPa·mm to 750 MPa·mm.

9. The three-dimensionally shaped electrically insulating product according to any one of claims 1 to 8, wherein
the protective layer contains fully aromatic polyamide or polyethylene terephthalate.

10. The three-dimensionally shaped electrically insulating product according to any one of claims 1 to 9, wherein
the protective layer is paper fabricated by a wet papermaking process.

11. The three-dimensionally shaped electrically insulating product according to any one of claims 1 to 10, wherein
the protective layer is fully aromatic polyamide paper containing fully aromatic polyamide fibers or polyethylene terephthalate paper containing polyethylene terephthalate fibers.

12. The three-dimensionally shaped electrically insulating product according to any one of claims 1 to 9, wherein
the protective layer is a nonwoven fabric.

13. The three-dimensionally shaped electrically insulating product according to any one of claims 1 to 12, wherein
at least a surface on the resin layer side of the protective layer is subjected to corona treatment.

14. The three-dimensionally shaped electrically insulating product according to any one of claims 1 to 13, the three-dimensionally shaped electrically insulating product being configured so that
the protective layer is disposed on each of both surfaces of the resin layer so as to be in contact therewith, and
layer adhesion force between the resin layer and each protective layer exceeds cohesive fracture energy within each of the resin layer and the protective layers.

15. The three-dimensionally shaped electrically insulating product according to any one of claims 1 to 14, being configured to be used for electrical insulation in a motor coil.

16. An electrically insulating sheet material to be formed into a three-dimensionally shaped product by being subjected at least to a bending process, comprising:
a resin layer in the form of a sheet containing a thermoplastic resin having nitrogen or sulfur in a molecule; and
a protective layer in the form of a sheet disposed on each of both sides of the resin layer.
